# EUROPEAN PATENT APPLICATION

(11) **EP 4 252 902 A1**
(43) Date of publication of application: **04.10.2023**
(21) Application number: 21898330.2
(22) Date of filing: 06.10.2021
(51) Int. Cl.: B01J 19/08, B01J 19/10, H05H 1/46

(54) **POWDER SURFACE TREATMENT PLASMA DEVICE USING FLAT FILTER ELECTRODES**

(30) Priority: 25.11.2020 KR 20200160038
(71) Applicant: Inoplaztech Co., Ltd., Ulsan, 44919 (KR)
(72) Inventor: LEE, Deuk Yeon, Ulju-gun, Ulsan 44919 (KR); LEE, Chang Young, Ulju-gun, Ulsan 44919 (KR); LEE, Ja Eun, Ulju-gun, Ulsan 44919 (KR); HAN, Yeon Bi, Ulju-gun, Ulsan 44919 (KR)
(74) Representative: Vossius & Partner Patentanwälte Rechtsanwälte mbB
(86) International application number: PCT/KR2021/013691
(87) International publication number: WO 2022/114504

(57) **Abstract**

A powder treatment plasma device according to the present invention maximizes processing capacity for performing processing all at once, by stacking a plurality of flat and porous filter electrodes, and thus improves processing efficiency. In addition, since vibration is applied to the filter electrodes by using a vibration generator while causing powder to be adsorbed on surfaces of the filter electrodes by using an adsorption means, the powder can be evenly dispersed on the surfaces of the filter electrodes and mixed, and thus the powder can be evenly surface-treated.

## Description

### Technical field

The present invention relates to a powder surface treatment plasma device using a flat filter electrode, and more particularly, to a powder surface treatment plasma device in which nano- or micro-sized powder is dispersed on and adsorbed on flat and porous filter electrodes so that surface treatment can be more uniformly performed.

### Background art

In general, since mutual aggregation of carbon nano-powder materials such as carbon nanotubes, graphene and the like is likely to occur in spite of excellent properties, dispersion technology of making carbon nano-powder materials mixed in a matrix material or solvent is essential for commercialization.

Dispersion technology according to the related art can be classified into a mechanical method such as milling or the like, a wet method using chemical reactions, and a dry method using plasma.

The mechanical method or the wet method has problems such as complicated processes, a long process time, damage of materials, impurity residue, wastewater generation, and the like.

On the other hand, a dry plasma method is a method preferred when considering mass production, environmental friendliness or the like. However, in order to perform plasma surface treatment on carbon nano-powder, a device for rotation, agitation, or the like for mixing carbon nano-powder uniformly is essential, and as the size of powder decreases, it is very difficult to perform uniform surface treatment, and there are problems such as low functionalization efficiency, and a long processing time.

Recently, a mechanical method such as rotation or agitation or the like is used in the dry method, and technology for mixing powder uniformly is adopted in the dry method. However, it is very difficult to perform uniform plasma treatment of a large amount of powder floating in a chamber with high efficiency.

### Detailed description of the invention

### Technical problem

The present invention provides a powder surface treatment plasma device using a flat filter electrode in which nano-powder can be uniformly treated, a processing time can be reduced and processing capacity can be improved.

### Technical solution

According to an aspect of the present invention, there is provided a powder surface treatment plasma device using a flat filter electrode, the powder surface treatment plasma device including: a chamber constituting a space in which plasma is generated; a filter electrode installed inside the chamber, formed to have a flat-plate shape and a porous structure and configured to generate plasma when power is applied to the filter electrode, thereby performing surface treatment on powders and functionalizing the powders; an adsorption means configured to reduce an internal pressure of the filter electrode to adsorb the powders on a surface of the filter electrode; and a vibration generator provided at one of the chamber and the filter electrode, configured to apply vibration to the filter electrode in at least one of a vertical direction and a horizontal direction to disperse the powders on the surface of the filter electrode.

The filter electrode may be stacked in plurality to have separation spaces with respect to each other and may further include a powder sprayer disposed in each of the separation spaces and configured to supply the powders to the separation space so that the powders are adsorbed on upper and lower surfaces of the filter electrodes.

The filter electrode may be stacked in plurality to have separation spaces with respect to each other and may further include a powder sprayer provided to be movable along the separation spaces and configured to supply the powders to each of the separation spaces consecutively so that the powders are adsorbed on upper and lower surfaces of the filter electrodes.

The powder surface treatment plasma device may further include: a rack provided inside the chamber so that the plurality of filter electrodes are inserted into the rack; and a shock absorption member provided between the rack and the filter electrodes and configured to absorb shock when the filter electrodes vibrate.

The adsorption means may include: a vacuum pump forming each inside of the filter electrodes in a vacuum state by absorbing air from each of lower portions of the plurality of filter electrodes; and a vacuum flow path connecting the vacuum pump to each lower portion of the plurality of filter electrodes.

The adsorption means may include a vacuum pump forming an inside of the filter electrode in a vacuum state by absorbing internal air of the filter electrode.

The filter electrodes may include an upper surface filter portion constituting an upper surface and formed as a porous structure, a lower surface filter portion constituting a lower surface and formed as a porous structure, and a vacuum portion that is formed between the upper surface filter portion and the lower surface filter portion and brought into a vacuum state by the vacuum pump.

The filter electrode may be stacked in plurality in a vertical direction to have separation spaces with respect to each other and may further include a powder sprayer configured to supply the powders into each separation space between the plurality of filter electrodes.

The vibration generator may include a sound vibration module configured to generate and resonate sound to apply sound vibration.

The vibration generator may include an ultrasonic vibrator configured to generate ultrasonic waves to apply vibration.

The powders may include nano- or micro-sized powders.

According to another aspect of the present invention, there is provided a powder surface treatment plasma device using a flat filter electrode, the powder surface treatment plasma device including: a chamber constituting a space in which plasma is generated; a filter electrode installed inside the chamber, formed to have a flat-plate shape and a porous structure and configured to generate plasma when power is applied to the filter electrode, thereby performing surface treatment on powders and functionalizing the powders; an adsorption means configured to reduce an internal pressure of the filter electrode to adsorb the powders on a surface of the filter electrode; and a vibration generator provided at one of the chamber and the filter electrode, configured to apply vibration to the filter electrode in at least one of a vertical direction and a horizontal direction to disperse the powders on the surface of the filter electrode, wherein the filter electrode is stacked in plurality to have separation spaces with respect to each other, and the adsorption means includes a vacuum pump forming each inside of the filter electrodes in a vacuum state by absorbing air from each of lower portions of the plurality of filter electrodes, and a vacuum flow path connecting the vacuum pump to each lower portion of the plurality of filter electrodes, and the vibration generator includes an ultrasonic vibrator provided at each of the filter electrodes and vibrating by generating ultrasonic waves.

The powders may include nano- or micro-sized powders.

According to another aspect of the present invention, there is provided a powder surface treatment plasma device using a flat filter electrode, the powder surface treatment plasma device including: a chamber constituting a space in which plasma is generated; a filter electrode installed inside the chamber, formed to have a flat-plate shape and a porous structure and configured to generate plasma when power is applied to the filter electrode, thereby performing surface treatment on powders and functionalizing the powders; an adsorption means configured to reduce an internal pressure of the filter electrode to adsorb the powders on a surface of the filter electrode; and a vibration generator provided at one of the chamber and the filter electrode, configured to apply vibration to the filter electrode in at least one of a vertical direction and a horizontal direction to disperse the powders on the surface of the filter electrode, wherein the filter electrode is stacked in plurality to have separation spaces with respect to each other, and the adsorption means includes a vacuum pump provided in the chamber and forming each inside of the filter electrodes in a vacuum state by absorbing internal air in the plurality of filter electrodes, and a vacuum flow path connecting the vacuum pump to the plurality of filter electrodes, and the vibration generator includes a sound vibration module provided at each of the filter electrodes and configured to generate and resonate sound to generate sound vibration.

The powders may include nano- or micro-sized powders.

According to another aspect of the present inventio, there is provided a powder surface treatment plasma device using a flat filter electrode, the powder surface treatment plasma device including: a filter electrode formed to have a flat-plate shape and a porous structure, configured to generate plasma when power is applied to the filter electrode and to perform surface treatment on nano- or micro-sized powders to functionalize the powders; a vibration generator applying vibration to the filter electrode to vibrate and disperse the powders on a surface of the filter electrode; an adsorption means reducing internal pressure of the filter electrode to prevent the vibrating and dispersed powders from deviating from the filter electrode outwards, to adsorb the powers from the surface of the filter electrode.

The vibration generator may include at least one of an ultrasonic vibrator generating ultrasonic waves to apply vibration, and a sound vibration module generating and resonating sound to apply sound vibration.

The adsorption means may include a vacuum pump forming an inside of the filter electrode in a vacuum state by absorbing internal air of the filter electrode.

The filter electrode may be stacked in plurality to have separation spaces with respect to each other.

According to another aspect of the present invention, there is provided a powder surface treatment plasma device using a flat filter electrode, the powder surface treatment plasma device including: a filter electrode formed as a flat plate having a porous structure, configured to generate plasma when power is applied to the filter electrode and to perform surface treatment on nano- or micro-sized powders to functionalize the powders; a ground electrode stacked to be spaced apart from the filter electrode in a vertical direction, formed as a flat plate to correspond to the filter electrode and grounded; and an adsorption means reducing internal pressure of one of the filter electrode and the ground electrode to adsorb the powders on a surface of one of the filter electrode and the ground electrode.

The filter electrode may be stacked in plurality to have separation spaces with respect to each other, and the ground electrode may be stacked in plurality alternately with the filter electrodes.

The powder surface treatment plasma device may further include a vibration generator applying vibration to one of the filter electrode and the ground electrode to vibrate and disperse the powders on a surface of one of the filter electrode and the ground electrode.

The vibration generator may include at least one of an ultrasonic vibrator generating ultrasonic waves to apply vibration, and a sound vibration module generating and resonating sound to applying sound vibration.

The adsorption means may include a vacuum pump forming an inside of one of the filter electrode and the ground electrode in vacuum states by absorbing internal air in one of the filter electrode and the ground electrode.

### Effects of the invention

In a powder surface treatment plasma device according to the present invention, processing capacity for performing processing all at once can be maximized by stacking a plurality of flat and porous filter electrodes, and thus processing efficiency can be improved.

In addition, since vibration is applied to the filter electrode by using a vibration generator while causing powders to be adsorbed on surfaces of the filter electrodes by using an adsorption means, the powders can be uniformly dispersed on the surfaces of the filter electrode and mixed, and thus the powders can be uniformly surface-treated.

### Description of the drawings

FIG. 1 is a configuration diagram schematically illustrating a powder surface treatment plasma device using a flat filter electrode according to a first embodiment of the present invention.
FIG. 2 is a side view illustrating the flat filter electrode shown in FIG. 1.
FIG. 3 is a perspective view illustrating the flat filter electrode shown in FIG. 1.
FIG. 4 is a cross-sectional view illustrating a filter electrode according to a second embodiment of the present invention.
FIG. 5 is a view schematically illustrating a powder surface treatment plasma device using a flat filter electrode according to a third embodiment of the present invention.
FIG. 6 is a view schematically illustrating a powder surface treatment plasma device using a flat filter electrode according to a fourth embodiment of the present invention.
FIG. 7 is a view schematically illustrating a powder surface treatment plasma device using a flat filter electrode according to a fifth embodiment of the present invention.
FIG. 8 is a view schematically illustrating a powder surface treatment plasma device using a flat filter electrode according to a sixth embodiment of the present invention.
FIG. 9 is a view schematically illustrating a powder surface treatment plasma device using a flat filter electrode according to a seventh embodiment of the present invention.

### Mode of the invention

Hereinafter, the present invention will be described in detail by describing exemplary embodiments of the present invention with reference to the accompanying drawings.

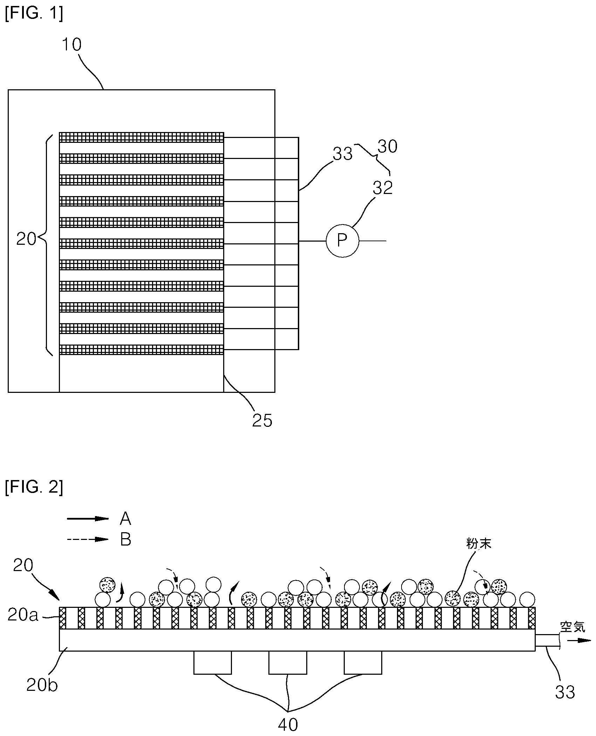

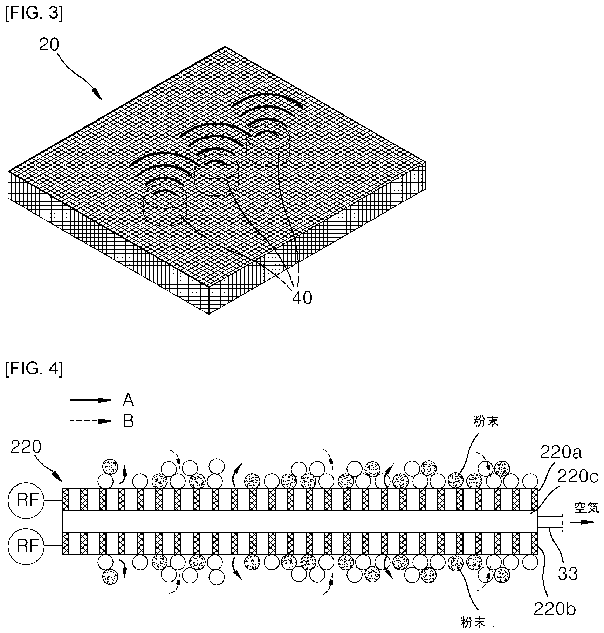

FIG. 1 is a configuration diagram schematically illustrating a powder surface treatment plasma device using a flat filter electrode according to a first embodiment of the present invention. FIG. 2 is a side view illustrating the flat filter electrode shown in FIG. 1. FIG. 3 is a perspective view illustrating the flat filter electrode shown in FIG. 1.

Referring to FIGS. 1 through 3, a powder surface treatment plasma device using a flat filter electrode according to an embodiment of the present invention includes a chamber 10, filter electrodes 20, an adsorption means 30, and a vibration generator.

The chamber 10 constitutes a space in which a plurality of filter electrodes 20 are accommodated and plasma is generated.

A power supply device (not shown), and a gas supply unit (not shown) for supplying external gas are connected to the chamber 10. The chamber 10 is grounded and serves as a ground electrode.

A rack 35 into which the plurality of filter electrodes 20 are inserted, is provided inside the chamber 10. However, the present invention is not limited thereto, and the plurality of filter electrodes 20 may also be stacked in a vertical direction to be spaced apart from each other by a predetermined distance without using the rack 25.

The rack 25 may also be fixed into the chamber 10 and may also be installed to be withdrawn from the chamber 10 and then may also be drawn in the chamber 10 again after the plurality of filter electrodes 20 are inserted into the rack 25.

The filter electrodes 20 are power supply electrodes to which power is applied from the power supply device (not shown). The filter electrodes 20 generates plasma in the chamber 10 when power is applied to the filter electrodes 20 from the power supply device (not shown) and gas is supplied into the chamber 10 from the gas supply unit (not shown). In the present embodiment, radio frequency (RF) plasma discharge is used, and thus the case where one filter electrode 20 is used and RF power is applied to the filter electrodes 20, has been described. However, the present invention is not limited thereto, and alternating current (AC) plasma discharge or direct current (DC) plasma discharge is possible, and a configuration including a first electrode as the filter electrodes 20 and a second electrode having a potential difference with the first electrode is possible, and the periphery of the filter electrodes 20 may also be ground-treated to be used as the second electrode. In the case of AC plasma discharge, each electrode is covered with a dielectric.

Plasma generated in the filter electrodes 20 is used to perform surface treatment of powder and to functionalize the powder. Surface functionalization of the powder allows powders to be dispersed without being aggregated to each other without degradation of existing properties, and an interfacial bonding force between the powders and other heterogeneous materials can be improved.

The filter electrodes 20 are formed in the form of flat plates so that the powders can be put on upper surfaces of the filter electrodes. The filter electrodes 20 have the shapes of rectangular plates, but the present invention is not limited thereto, and the filter electrodes 20 may have the shapes of circular plates.

A plurality of filter electrodes 20 may be stacked in a vertical direction or horizontal direction to have separation spaces with respect to each other. In the present embodiment, the case where 10 of the plurality of filter electrodes 20 are inserted into the rack 25 to be spaced apart from each other in the vertical direction, will be described. The stack number of the filter electrodes 20 may be adjusted according to processing capacity.

Each of the filter electrodes 20 is formed to have a porous structure.

Each of the filter electrodes 20 includes a filter portion 20a formed as a porous body or porous mesh, and a vacuum portion 20b that is formed under the filter portion 20a and is brought into a vacuum state by using a vacuum pump 32 to be described below. The filter electrodes 20 may also be formed in such a way that only upper surfaces thereof have porous structures.

It is preferable that the filter portion 20a is processed to a nano or micro unit size, holes are formed smaller than the size of the powder, or a nano-woven fabric is provided to prevent the powder from passing therethrough.

The adsorption means 30 is a device for adsorbing the powder on surfaces of the filter electrodes 20 by reducing the internal pressure of the filter electrodes 20.

The adsorption means 30 includes a vacuum pump 32, a vacuum flow path 33, and a powder blocking portion (not shown) for filtering the powder.

The vacuum pump 32 is installed outside the chamber 10 and absorbs air from the insides of the plurality of filter electrodes 20 to form the insides of the plurality of filter electrodes 20 in a vacuum state.

The vacuum flow path 33 is a flow path connecting the vacuum pump 32 to lower portions of the plurality of filter electrodes 20. One end of the vacuum flow path 33 is connected to each of the lower portions of the plurality of filter electrodes 20, and the other end of the vacuum flow path 33 is connected to the vacuum pump 32. The vacuum flow path 33 is connected to the vacuum portion 20b of the filter electrode 20.

However, the present invention is not limited thereto, and the vacuum pump 32 may also be installed at each lower portion of the filter electrodes 20 and may also be installed at the rack 25.

The vibration generator applies vibration to the filter electrodes 20 in at least one direction of the vertical direction and the horizontal direction, thereby dispersing the powder on the surfaces of the filter electrodes 20. That is, the vibration generator generates vibration similar to the effect of tapping the lower portions of the filter electrode 20 to disperse the powder.

The vibration generator may be a sound vibration module (not shown) or an ultrasonic vibrator 40.

The sound vibration module (not shown) is a sound resonance vibrator that generates and resonates sound to generate sound vibration in the filter electrodes 20. The sound vibration module may also be mounted on the filter electrodes 20 or may also be installed at the rack 25.

Hereinafter, in the present embodiment, the case where the ultrasonic vibrator is used, will be described with reference to FIG. 3.

The ultrasonic vibrator 40 is provided at each of the filter electrodes 20 to generate ultrasonic waves with power applied from the power supply device (not shown) to generate vibration.

The case where the ultrasonic vibrator 40 is mounted on each of the lower portions of the filter electrodes 20, will be described. A plurality of ultrasonic vibrators 40 may be mounted to be spaced apart from each other by a predetermined distance. In the present embodiment, the case where three ultrasonic vibrators 40 are provided at the center of the lower portions of the filter electrodes 20, will be described. Each of the ultrasonic vibrators 40 applies vibration to the center of each of the lower portions of the filter electrodes 20 so that the powder can be dispersed from the center toward edges on the surfaces of the filter electrodes 20.

In the present embodiment, the case where the ultrasonic vibrators 40 are attached to the lower surface of the vacuum portion 20b of the filter electrodes 20, has been described, but the present invention is not limited thereto, and the ultrasonic vibrators 40 may also be installed to be spaced apart from the filter electrodes 20 by a predetermined distance.

In addition, the ultrasonic vibrators 40 may also be installed at the rack 25 and may apply vibration to the rack 25 to vibrate the plurality of filter electrodes 20.

Meanwhile, the powder includes nano- or micro-sized powder such as carbon nanotubes, graphene, and the like.

The operation of a plasma device according to an embodiment of the present invention having the above-described configuration will be described as below.

After the powder is put on each upper surface of the plurality of filter electrodes 20, the filter electrodes 20 are inserted into and stacked on the rack 25.

In the present embodiment, the case where the plurality of filter electrodes 20 are inserted into and stacked on the rack 25 has been described, but the present invention is not limited thereto, and the plurality of filter electrodes 20 may also be stacked to be spaced apart from each other by a predetermined distance without using the rack 25.

Also, the present invention is not limited to the above-described embodiment, and the powder may also be supplied to the plurality of filter electrodes 20 mounted inside the chamber 10.

When the vacuum pump 32 is operated, the internal pressure of the vacuum portion 20b of the filter electrodes 20 is reduced due to the inhalation pressure of the vacuum pump 32.

When the inside of the vacuum portion 20b of the filter electrodes 20 is brought into a vacuum state, the powder is adsorbed on the surfaces of the filter electrodes 20. That is, an adsorption force A acts on the powders in a direction toward the surfaces of the filter electrodes 20.

Also, when the ultrasonic vibrator 40 is operated, vibration is applied to the filter electrodes 20 by the ultrasonic vibrator 40.

When vibration is applied to the lower portions of the filter electrodes 20, the positions of the powders are changed on the upper surfaces of the filter electrodes 20 and thus the powders are uniformly dispersed. That is, a dispersion force B acts on the powders in a direction of flying from the surfaces of the filter electrodes 20.

In this case, the adsorption force A and the dispersion force B may be adjusted according to the inhalation force of the vacuum pump 30 and the vibration intensity of the ultrasonic vibrator 40. The adsorption force A and the dispersion force B may be used to calculate an optimum value through experiments and the like. The adsorption force A and the dispersion force B are properly adjusted so that only the positions of the powders can be moved without flying from the surfaces of the filter electrodes 20and thus plasma surface treatment can be evenly performed on all of the powders.

Also, the powders can be prevented from being stacked on the surfaces of the filter electrodes 20 to a uniform thickness or more.

Also, the effect of tapping the filter electrodes 20 is achieved by using the ultrasonic vibrator 40 so that a process of repeating completely removing and dispersing the powders from and on the surfaces of the filter electrodes 20 is not required and thus a processing time can be reduced.

Thus, position movement is possible in a state in which the powders are adsorbed on the surfaces of the filter electrodes 20, and thus the powders are evenly mixed and the powders are evenly surface-treated by plasma.

A surface treatment process by using plasma may be performed for a preset time. When the set time has elapsed, plasma treatment is stopped, and the powders are collected.

As described above, in the present invention, the powders are adsorbed on and dispersed on the surfaces of the plurality of filter electrodes 20 and then are surface-treated by plasma.

Thus, capacity for performing processing all at once can be maximized according to the stack number of the filter electrodes 20.

Also, the adsorption force A and the dispersion force B are properly adjusted so that the position movement of the powders can be performed without flying from the surfaces of the filter electrodes 20 and thus plasma surface treatment can be evenly performed on all of the powders.

Also, since the above-described method does not require a repetition process of repeating completely removing and dispersing the powders from and on the surfaces of the filter electrodes 20, surface treatment can be performed all at once and thus, a processing time can be reduced compared to processing capacity.

Also, vibration is applied to the filter electrodes 20 and thus, the powders can be evenly mixed and dispersed and thus uniform surface treatment can be performed.

FIG. 4 is a cross-sectional view illustrating a filter electrode according to a second embodiment of the present invention.

Referring to FIG. 4, filter electrodes 220 according to the second embodiment of the present inventio is different from the first embodiment in that the filter electrodes 220 according to the second embodiment of the present invention includes an upper surface filter portion 220a, a lower surface filter portion 220b and a vacuum portion 220c, and the other configurations and operations are similar to each other, and different configurations will be described, and detailed descriptions of similar configurations are omitted.

The filter electrodes 220 are formed to have porous structures, and a plurality of filter electrodes 220 are stacked to have separation spaces in the vertical direction.

The upper surface filter portion 220a and the lower surface filter portion 220b are formed as porous bodies or porous meshes. The upper surface filter portion 220a and the lower surface filter portion 220b are processed in a nano or micro unit size, and holes are formed to be smaller than the sizes of the powders, or the upper surface filter portion 220a and the lower surface filter portion 220b include nano-non-woven fabric so that the powders do not pass therethrough.

The vacuum portion 220c is formed between the upper surface filter portion 220a and the lower surface filter portion 220b and is brought into a vacuum state by the vacuum pump 32. A vacuum flow path 33 is connected to the vacuum portion 220c.

When the vacuum pump 32 is operated, the vacuum pump 32 absorbs internal air of the vacuum portion 220c and thus the inside of the vacuum portion 220c is brought into a vacuum state.

When the inside of the vacuum portion 220c is brought into a vacuum state, the powders supplied to the inside of the chamber 10 or the periphery of the filter electrodes 220 may be adsorbed on the surfaces of the upper surface filter portion 220a and the lower surface filter portion 220b.

Thus, since the powders can be adsorbed on the upper and lower surfaces of the filter electrodes 220 and plasma surface-treated, plasma treatment capacity can be increased.

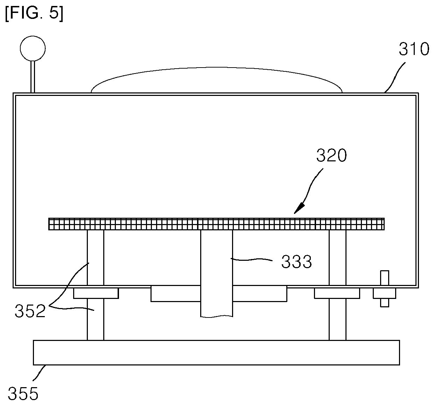

FIG. 5 is a view schematically illustrating a powder surface treatment plasma device using a flat filter electrode according to a third embodiment of the present invention.

Referring to FIG. 5, the powder surface treatment plasma device using a flat filter electrode according to the third embodiment of the present invention is different from the first embodiment in that the powder treatment plasma device using a flat filter electrode according to the third embodiment of the present invention includes a chamber 310, filter electrodes 320, an adsorption means 330, and a vibration generator, wherein the vibration generator is a sound vibration module 355, and the other configurations and operations are similar to those of the first embodiment and thus, different configurations will be described, and detailed descriptions of similar configurations are omitted.

The sound vibration module 355 is a sound resonance vibrator that generates and resonates sound to generate sound vibration in the filter electrodes 320.

The upper portion of the sound vibration module 355 is connected to the filter electrodes 320 by using a connection member 352.

In the present embodiment, the case where one filter electrode 320 is disposed, has been described, but the present invention is not limited thereto, and a plurality of filter electrodes 320 may be arranged to be spaced apart from each other by a predetermined distance in the vertical direction or the horizontal direction.

The vacuum flow path 333 connected to a vacuum pump (not shown) is connected to the inside of the filter electrodes 320.

Also, a rack is provided inside the chamber so that the filter electrodes 320 can be inserted into the rack, and a shock absorption member (not shown) for absorbing shock during vibration of the filter electrodes 320 may be provided between the rack and the filter electrodes 320.

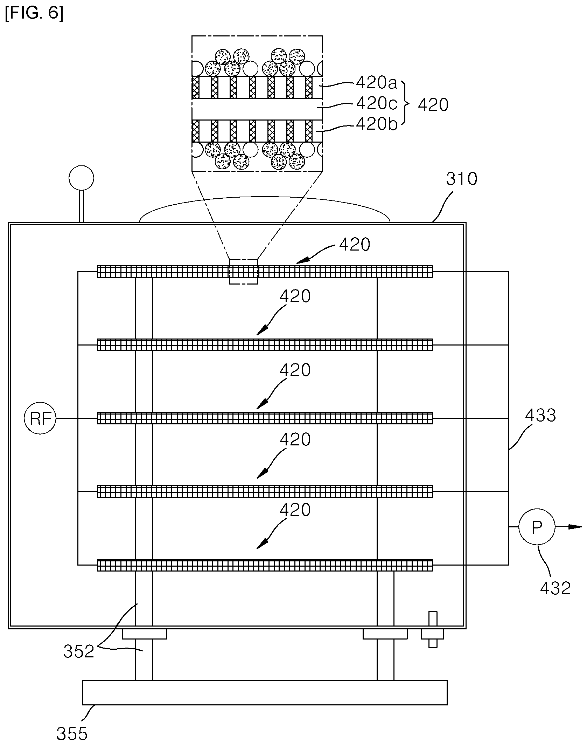

FIG. 6 is a view schematically illustrating a powder surface treatment plasma device using a flat filter electrode according to a fourth embodiment of the present invention.

Referring to FIG. 6, the powder surface treatment plasma device using a flat filter electrode according to the fourth embodiment of the present invention is different from the third embodiment in that, in the powder surface treatment plasma device using a flat filter electrode according to the fourth embodiment of the present invention, a plurality of filter electrodes 420 are arranged to be spaced apart from each other by a predetermined distance in the vertical direction and each of the filter electrodes 420 includes an upper surface filter portion 420a, a lower surface filter portion 420b and a vacuum portion 420c, and the other configurations and operations are similar to those of the third embodiment, and thus, different configurations will be described, and detailed descriptions of similar configurations are omitted.

A plurality of filter electrodes 420 are stacked to have separation spaces with respect to each other in the vertical direction. The stack number of the filter electrodes 420 can be adjusted according to processing capacity.

The upper surface filter portion 420a and the lower surface filter portion 420b are formed as porous bodies or porous meshes. The upper surface filter portion 420a and the lower surface filter portion 420b are processed in a nano or micro unit size, and holes are formed smaller than the size of the powder to prevent the powder from passing therethrough.

The vacuum portion 420c is formed between the upper surface filter portion 420a and the lower surface filter portion 420b and is brought into a vacuum state by the vacuum pump 432. A vacuum flow path 433 is connected to the vacuum portion 420c.

When the vacuum pump 432 is operated, the vacuum pump 432 absorbs the internal air of the vacuum portion 420c so that the inside of the vacuum portion 420c is brought into a vacuum state.

When the inside of the vacuum portion 420c is brought into a vacuum state, the powders supplied to the inside of the chamber 310 or the periphery of the filter electrodes 420 may be adsorbed on the surfaces of the upper surface filter portion 420a and the lower surface filter portion 420b.

Thus, the powders are adsorbed on all of the upper and lower surfaces of the filter electrodes 420 and can be plasma surface-treated so that plasma treatment capacity can be increased.

In the above-described embodiment, the case where the vacuum portion 420c of the plurality of filter electrodes 420 is brought into a vacuum state by using one vacuum pump 432, has been described, but the present invention is not limited thereto, and a vacuum flow path and a vacuum pump can also be connected to each vacuum portion 420c of the plurality of filter electrodes 420.

Also, a powder sprayer (not shown) for spraying and supplying powder is provided in a separation space between the plurality of filter electrodes 420.

The powder sprayer (not shown) is disposed in each separation space between the plurality of filter electrodes 420 to spray the powders in bulk into the separation spaces, and one powder sprayer (not shown) can also be installed to be movable in the vertical direction to consecutively spray the powders into each separation space between the filter electrodes 420. Also, the powder sprayer (not shown) may also spray the powders into the chamber 310.

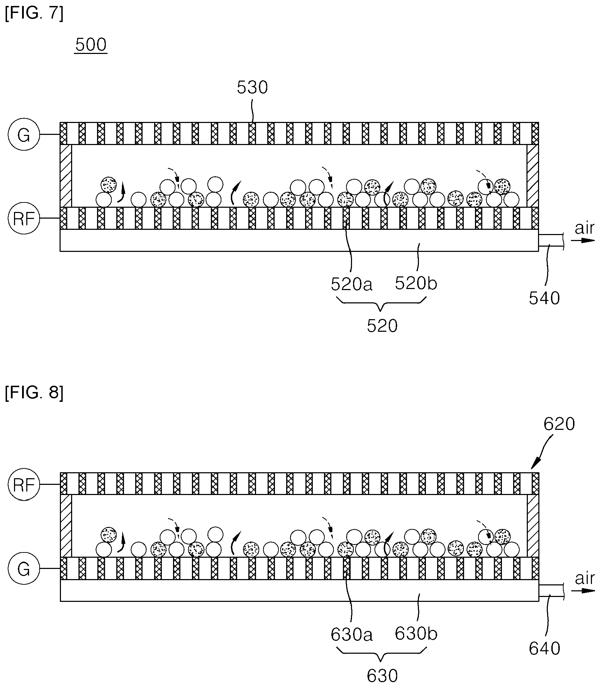

FIG. 7 is a view schematically illustrating a powder surface treatment plasma device using flat filter electrodes according to a fifth embodiment of the present invention.

Referring to FIG. 7, the powder surface treatment plasma device using a flat filter electrode according to the fifth embodiment is different from the first embodiment in that, in the powder surface treatment plasma device using a flat filter electrode according to the fifth embodiment of the present invention, a filter electrode 520 and a ground electrode 530 are arranged to be spaced apart from each other in the vertical direction and powders are supplied between the filter electrode 520 and the ground electrode 530, and the other configurations and operations are similar to those of the first embodiment, and different points will be described in detail.

The filter electrode 520 are formed in the form of flat plates having porous structures to generate plasma when power is applied to the filter electrode 520, to perform surface treatment on the powders, thereby functionalizing the powders. Here, one plasma power of RF, AC, and DC pluse may be used as the power. In the present embodiment, the case where RF power is applied, will be described.

The filter electrode 520 includes a filter portion 520a formed as a porous body or a porous mesh, and a vacuum portion 520b that is formed under the filter portion 520a and is brought into a vacuum state by a vacuum pump to be described below. The filter electrode 520 may also be formed in such a way that only upper surfaces thereof have porous structures.

A separation space is formed between the filter electrode 520 and the ground electrode 530.

The ground electrode 530 is formed in the form of flat plates to correspond to the filter electrode 520. The ground electrode 530 may also have porous structures or may be formed in the form of general flat plates.

An adsorption means is provided under the filter electrode 520. The adsorption means includes a vacuum flow path 540 connected to the vacuum portion 520b of the filter electrode 520, and a vacuum pump (not shown) connected to the vacuum flow path 540.

A vibration generator (not shown) for vibrating and dispersing the powders is provided at lower portions of each of the filter electrode 520 and the ground electrode530. The vibration generator (not shown) may be an ultrasonic vibrator, a sound vibration module or the like.

FIG. 8 is a view schematically illustrating a powder surface treatment plasma device using a flat filter electrodes according to a sixth embodiment of the present invention.

Referring to FIG. 8, the powder surface treatment plasma device using a flat filter electrode according to the sixth embodiment of the present invention is different from the fifth embodiment in that, in the powder surface treatment plasma device using a flat filter electrode according to the sixth embodiment of the present invention, a filter electrode 620 and a ground electrode 630 are arranged to be spaced apart from each other in the vertical direction and an adsorption means is provided under the ground electrode 630, and the other configurations and operations are similar to those of the fifth embodiment, and different points will be described in detail.

The filter electrode 620 is formed in the form of flat plates having porous structures to generate plasma when power is applied to the filter electrode 620, to perform surface treatment on the powders, thereby functionalizing the powders. Here, one plasma power of RF, AC, and DC pluse may be used as the power. In the present embodiment, the case where RF power is applied, will be described.

A separation space is formed between the filter electrode 620 and the ground electrode 630.

The ground electrode 630 is formed in the form of flat plates to correspond to the filter electrode 620. The ground electrode 630 has a porous structure, for example. The ground electrode 630 includes a porous portion 630a formed as a porous body or porous mesh, and a vacuum portion 630b that is formed under the porous portion 630a and brought into a vacuums state by a vacuum pump to be described below. The ground electrode 630 may also be formed in such a way that only an upper surfaces thereof has a porous structure.

An adsorption means is provided under the ground electrode 630. The adsorption means further includes a vacuum flow path 640 connected to vacuum 630b of the ground electrode 630, and a vacuum pump (not shown) connected to the vacuum flow path 640.

A vibration generator (not shown) for vibrating and dispersing powders is provided at a lower portion of the ground electrode 630. An ultrasonic vibrator, a sound vibration module, and the like may be used as the vibration generator (not shown).

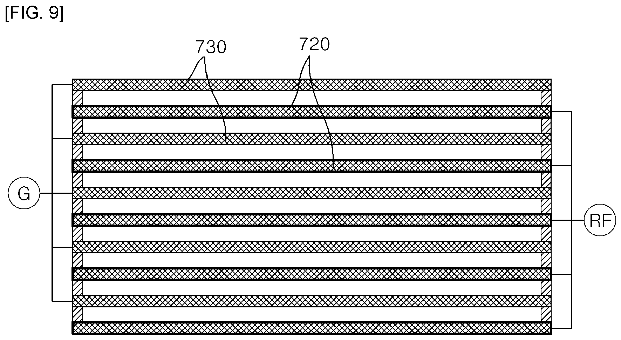

FIG. 9 is a view schematically illustrating a powder surface treatment plasma device using a flat filter electrode according to a seventh embodiment of the present invention.

Referring to FIG. 9, the powder surface treatment plasma device using a flat filter electrodes according to the seventh embodiment of the present invention is different from the fifth embodiment in that, in the powder surface treatment plasma device using a flat filter electrode according to the seventh embodiment of the present invention, a plurality of filter electrodes 720 are stacked to be spaced apart from each other in the vertical direction and a plurality of ground electrodes 730 are stacked alternately with the filter electrodes 720, and the other configurations and operations are similar to those of the fifth embodiment, and thus, detailed descriptions of the similar contents are omitted, and different points will be described in detail.

One plasma power of RF, AC, and DC pluse may be used as power applied to the filter electrodes 720. In the present embodiment, the case where RF power is applied, will be described.

As described above, when the plurality of ground electrodes 730 are stacked alternately with the plurality of filter electrodes 720, plasma density can be relatively reduced compared to the case where a single ground electrode is used, but an ion collision effect can be further improved.

While the present invention has been particularly shown and described with reference to exemplary embodiments thereof, it will be understood by those of ordinary skill in the art that various changes in form and details may be made therein without departing from the spirit and scope of the present invention as defined by the following claims.

### Industrial Applicability

According to the present invention, a powder surface treatment plasma device capable of performing surface treatment more uniformly can be manufactured.

## Claims

1. A powder surface treatment plasma device using a flat filter electrode, the powder surface treatment plasma device comprising:
a chamber constituting a space in which plasma is generated;
a filter electrode installed inside the chamber, formed to have a flat-plate shape and a porous structure and configured to generate plasma when power is applied to the filter electrode, thereby performing surface treatment on powders and functionalizing the powders;
an adsorption means configured to reduce an internal pressure of the filter electrode to adsorb the powders on a surface of the filter electrode; and
a vibration generator provided at one of the chamber and the filter electrode, configured to apply vibration to the filter electrode in at least one of a vertical direction and a horizontal direction to disperse the powders on the surface of the filter electrode.

2. The powder surface treatment plasma device of claim 1, wherein
the filter electrode is stacked in plurality to have separation spaces with respect to each other and further comprises a powder sprayer disposed in each of the separation spaces and configured to supply the powders to the separation space so that the powders are adsorbed on upper and lower surfaces of the filter electrodes.

3. The powder surface treatment plasma device of claim 1, wherein
the filter electrode is stacked in plurality to have separation spaces with respect to each other and further comprises a powder sprayer provided to be movable along the separation spaces and configured to supply the powders to each of the separation spaces consecutively so that the powders are adsorbed on upper and lower surfaces of the filter electrodes.

4. The powder surface treatment plasma device of claim 1, further comprising:
a rack provided inside the chamber so that the plurality of filter electrodes are inserted into the rack; and
a shock absorption member provided between the rack and the filter electrodes and configured to absorb shock when the filter electrodes vibrate.

5. The powder surface treatment plasma device of claim 2, wherein the adsorption means comprises:
a vacuum pump forming each inside of the filter electrodes in a vacuum state by absorbing air from each of lower portions of the plurality of filter electrodes; and
a vacuum flow path connecting the vacuum pump to each lower portion of the plurality of filter electrodes.

6. The powder surface treatment plasma device of claim 1, wherein the adsorption means comprises a vacuum pump forming an inside of the filter electrode in a vacuum state by absorbing internal air of the filter electrode.

7. The powder surface treatment plasma device of claim 6, wherein the filter electrodes comprise an upper surface filter portion constituting an upper surface and formed as a porous structure, a lower surface filter portion constituting a lower surface and formed as a porous structure, and a vacuum portion that is formed between the upper surface filter portion and the lower surface filter portion and brought into a vacuum state by the vacuum pump.

8. The powder surface treatment plasma device of claim 7, wherein
the filter electrode is stacked in plurality in a vertical direction to have separation spaces with respect to each other and further comprises a powder sprayer configured to supply the powders into each separation space between the plurality of filter electrodes.

9. The powder surface treatment plasma device of claim 1, wherein the vibration generator comprises a sound vibration module configured to generate and resonate sound to apply sound vibration.

10. The powder surface treatment plasma device of claim 1, wherein the vibration generator comprises an ultrasonic vibrator configured to generate ultrasonic waves to apply vibration.

11. The powder surface treatment plasma device of claim 1, wherein the powders comprise nano- or micro-sized powders.

12. A powder surface treatment plasma device using a flat filter electrode, the powder surface treatment plasma device comprising:
a chamber constituting a space in which plasma is generated;
a filter electrode installed inside the chamber, formed to have a flat-plate shape and a porous structure and configured to generate plasma when power is applied to the filter electrode, thereby performing surface treatment on powders and functionalizing the powders;
an adsorption means configured to reduce an internal pressure of the filter electrode to adsorb the powders on a surface of the filter electrode; and
a vibration generator provided at one of the chamber and the filter electrode, configured to apply vibration to the filter electrode in at least one of a vertical direction and a horizontal direction to disperse the powders on the surfaces of the filter electrode,
wherein the filter electrode is stacked in plurality to have separation spaces with respect to each other, and
the adsorption means comprises a vacuum pump forming each inside of the filter electrodes in a vacuum state by absorbing air from each of lower portions of the plurality of filter electrodes, and a vacuum flow path connecting the vacuum pump to each lower portion of the plurality of filter electrodes, and
the vibration generator comprises an ultrasonic vibrator provided at each of the filter electrodes and vibrating by generating ultrasonic waves.

13. The powder surface treatment plasma device of claim 12, wherein the powders comprise nano- or micro-sized powders.

14. A powder surface treatment plasma device using a flat filter electrode, the powder surface treatment plasma device comprising:
a chamber constituting a space in which plasma is generated;
a filter electrode installed inside the chamber, formed to have a flat-plate shape and a porous structure and configured to generate plasma when power is applied to the filter electrode, thereby performing surface treatment on powders and functionalizing the powders;
an adsorption means configured to reduce an internal pressure of the filter electrode to adsorb the powders on a surface of the filter electrode; and
a vibration generator provided at one of the chamber and the filter electrode, configured to apply vibration to the filter electrode in at least one of a vertical direction and a horizontal direction to disperse the powders on the surface of the filter electrode,
wherein the filter electrode is stacked in plurality to have separation spaces with respect to each other, and
the adsorption means comprises a vacuum pump provided in the chamber and forming each inside of the filter electrodes in a vacuum state by absorbing internal air in the plurality of filter electrodes, and a vacuum flow path connecting the vacuum pump to the plurality of filter electrodes, and
the vibration generator comprises a sound vibration module provided at each of the filter electrodes and configured to generate and resonate sound to generate sound vibration.

15. The powder surface treatment plasma device of claim 14, wherein the powders comprise nano- or micro-sized powders.

16. A powder surface treatment plasma device using a flat filter electrode, the powder surface treatment plasma device comprising:
a filter electrode formed to have a flat-plate shape and a porous structure, configured to generate plasma when power is applied to the filter electrode and to perform surface treatment on nano- or micro-sized powders to functionalize the powders;
a vibration generator applying vibration to the filter electrode to vibrate and disperse the powders on a surface of the filter electrode; and
an adsorption means reducing internal pressure of the filter electrode to prevent the vibrating and dispersed powders from deviating from the filter electrode outwards, to adsorb the powers from the surface of the filter electrode.

17. The powder surface treatment plasma device of claim 16, wherein the vibration generator comprises at least one of an ultrasonic vibrator generating ultrasonic waves to apply vibration, and a sound vibration module generating and resonating sound to apply sound vibration.

18. The powder surface treatment plasma device of claim 16, wherein the adsorption means comprises a vacuum pump forming an inside of the filter electrode in a vacuum state by absorbing internal air of the filter electrode.

19. The powder surface treatment plasma device of claim 16, wherein the filter electrode is stacked in plurality to have separation spaces with respect to each other.

20. A powder surface treatment plasma device using a flat filter electrode, the powder surface treatment plasma device comprising:
a filter electrode formed as a flat plate having a porous structure, configured to generate plasma when power is applied to the filter electrode and to perform surface treatment on nano- or micro-sized powders to functionalize the powders;
a ground electrode stacked to be spaced apart from the filter electrode in a vertical direction, formed as a flat plate to correspond to the filter electrode and grounded; and
an adsorption means reducing internal pressure of one of the filter electrode and the ground electrode to adsorb the powders on a surface of one of the filter electrode and the ground electrode.

21. The powder surface treatment plasma device of claim 20, wherein the filter electrode is stacked in plurality to have separation spaces with respect to each other, and the ground electrode is stacked in plurality alternately with the filter electrodes.

22. The powder surface treatment plasma device of claim 20, further comprising a vibration generator applying vibration to one of the filter electrode and the ground electrode to vibrate and disperse the powders on a surface of one of the filter electrode and the ground electrode.

23. The powder surface treatment plasma device of claim 22, wherein the vibration generator comprises at least one of an ultrasonic vibrator generating ultrasonic waves to apply vibration, and a sound vibration module generating and resonating sound to applying sound vibration.

24. The powder surface treatment plasma device of claim 20, wherein the adsorption means comprises a vacuum pump forming an inside of one of the filter electrode and the ground electrode in vacuum states by absorbing internal air in one of the filter electrode and the ground electrode.
